# EUROPEAN PATENT APPLICATION

(11) **EP 4 492 030 A1**
(43) Date of publication of application: **15.01.2025**
(21) Application number: 24184950.4
(22) Date of filing: 27.06.2024
(51) Int. Cl.: G01M 3/38

(54) **APPARATUS, METHOD, AND PROGRAM**

(30) Priority: 11.07.2023 JP 2023113860
(71) Applicant: Yokogawa Electric Corporation, Tokyo 180-8750 (JP)
(72) Inventor: OGAWA, Jun-Ichi, Musashino-shi, Tokyo, 180-8750 (JP); SHAMOTO, Taiki, Musashino-shi, Tokyo, 180-8750 (JP); OTAKE, Yuma, Musashino-shi, Tokyo, 180-8750 (JP)
(74) Representative: Hoffmann Eitle

(57) **Abstract**

[Solving means] An apparatus is provided comprising an image acquisition unit which acquires an image capturing a state of a flow channel in a flow reactor through which a fluid flows to be reacted, and a detection unit which detects liquid leakage in the flow channel based on the acquired image. The apparatus comprises a detection member for detecting liquid leakage in the flow channel, the image acquisition unit acquires an image of the detection member, and the detection unit detects liquid leakage in the flow channel based on the image of the detection member. The detection member includes ground glass. The detection member is arranged below the flow channel, the image acquisition unit acquires an image of ground glass, which is the detection member, and the detection unit detects liquid leakage in the flow channel in response to sensing variation in at least one of color or brightness in the image of the ground glass.

## Description

### BACKGROUND

### 1. TECHNICAL FIELD

The present invention relates to an apparatus, a method, and a program.

### 2. RELATED ART

Patent document 1 describes "a liquid storage pan for storing leaked liquid at the bottom portion of a fluid reactor, and a liquid leakage sensor for sensing the leaked liquid". Patent document 2 describes "a flow channel for leakage detection that detects leakage of a first and second solution or reaction product solution thereof from a flow channel". Patent document 3 describes that "the pressure of a sealing fluid in the sealing fluid atmosphere is set to be higher than the pressure of the flowing fluid in the fluid flow channel". Patent document 4 describes that "the first-stage microreactor 10A is provided with a first leak detection sensor 16a, the second-stage microreactor 10B is provided with a second leak detection sensor 16b, and the third-stage microreactor 10C is provided with a third leak detection sensor 16c".

### [Prior Art Literatures]

### [Patent Documents]

Patent Document 1: International Publication No. 2006/043642
Patent Document 2: Japanese Patent Application Publication No. 2007-98237
Patent Document 3: Japanese Patent Application Publication No. 2006-289249
Patent Document 4: International Publication No. 2019/049547

### GENERAL DISCLOSURE

In a first aspect of the present invention, an apparatus is provided. The apparatus comprises an image acquisition unit which acquires an image capturing a state of a flow channel in a flow reactor through which a fluid flows to be reacted, and a detection unit which detects liquid leakage in the flow channel based on the image acquired by the image acquisition unit.

The above-described apparatus comprises a detection member for detecting liquid leakage in the flow channel, the image acquisition unit acquires an image of the detection member as a state of the flow channel, and the detection unit detects liquid leakage in the flow channel based on the image of the detection member. The detection unit may determine, from the detection member that detected liquid leakage, a component in which liquid leakage occurred.

In the above-described apparatus, variation in transparency, color, brightness, or a shape occurs in at least a part of the detection member when liquid leakage occurs in the flow channel.

In the above-described apparatus, the detection member includes ground glass. The detection unit may detect that liquid leakage has occurred when variation in the brightness of the ground glass exceeds a threshold in an image of the detection member.

In the above-described apparatus, the detection member is arranged below the flow channel, the image acquisition unit acquires an image of ground glass, which is the detection member, as a state of the flow channel, and the detection unit detects liquid leakage in the flow channel in response to sensing variation in at least one of color or brightness in the image of the ground glass.

In any of the above-described apparatuses, the detection member has a containing unit which contains the flow channel in a detection liquid, the image acquisition unit acquires an image of the detection liquid in the containing unit as a state of the flow channel, and the detection unit detects liquid leakage in the flow channel based on the image of the detection liquid.

In the above-described apparatus, the detection unit detects liquid leakage in the flow channel in response to sensing a variation in at least one of color and brightness in the image of the liquid.

In any of the above-described apparatuses, the image acquisition unit acquires an image of a surrounding of the flow channel as a state of the flow channel, and the detection unit detects liquid leakage in the flow channel in response to sensing fluctuation of light in the surrounding of the flow channel.

In any of the above-described apparatuses, the image acquisition unit acquires an image in which a state of the flow channel is captured with an infrared camera.

In any of the above-described apparatuses, the image acquisition unit acquires a three-dimensional image in which a state of the flow channel is captured with a plurality of cameras.

In any of the above-described apparatuses, the image acquisition unit acquires an image of a state of the flow channel captured by using, as a light source, at least one of a near-infrared light, an LED, a laser, or a light reflected by a diffuser plate.

In a second aspect of the present invention, a method is provided. The method comprises acquiring an image capturing a state of a flow channel in a flow reactor through which a fluid flows to be reacted, and detecting liquid leakage in the flow channel based on the image acquired by the image acquisition unit.

In a third aspect of the present invention, a program is provided. The program causes a computer to function as an image acquisition unit which acquires an image capturing a state of a flow channel in a flow reactor through which a fluid flows to be reacted, and a detection unit which detects liquid leakage in the flow channel based on the image acquired by the image acquisition unit.

The summary clause does not necessarily describe all necessary features of the embodiments of the present invention. The present invention may also be a sub-combination of the features described above.

### BRIEF DESCRIPTION OF THE DRAWINGS

Fig. 1 is a schematic view of a reactor 10 according to the present embodiment.
Fig. 2 illustrates a descriptive view of a part of the reaction unit 100.
Fig. 3 is a schematic view illustrating an example of a detection member in the present embodiment.
Fig. 4 is a schematic view illustrating another example of a detection member in the present embodiment.
Fig. 5 illustrates a block diagram of a control unit 200.
Fig. 6 illustrates a reaction flow in the reactor 10 of the present embodiment.
Fig. 7 illustrates an example of a computer 2200 in which a plurality of aspects of the present invention may be entirely or partially embodied.

### DESCRIPTION OF EXEMPLARY EMBODIMENTS

Hereinafter, embodiments of the present invention will be described. However, the following embodiments are not for limiting the invention according to the claims. In addition, not all of the combinations of features described in the embodiments are essential to the solution of the invention.

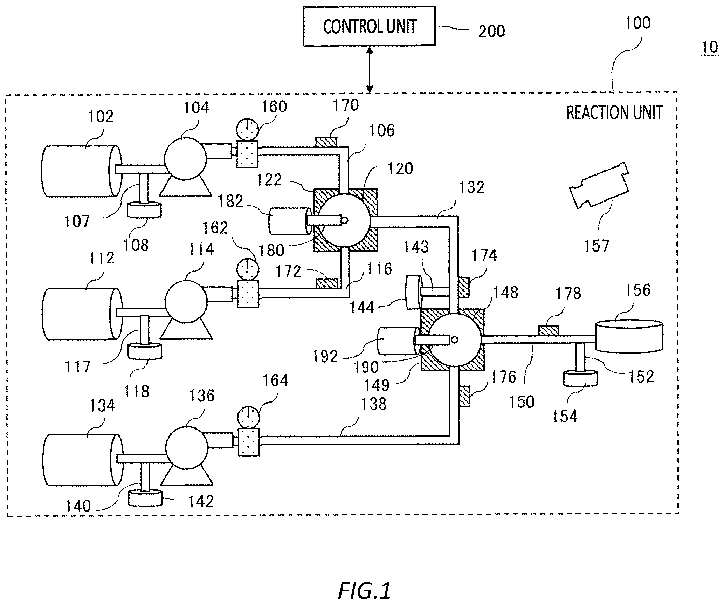

Fig. 1 is a schematic view of a reactor 10 according to the present embodiment. In order to generate a target object such as peptide, the reactor 10 mixes a plurality of types of material fluid in the flow channel and causes a reaction fluid, which is a mixture, to flow through the flow channel and causes the reaction to proceed. The reactor 10 performs image-capturing of a state of the flow channel, and detects liquid leakage from the flow channel based on the captured image. The reactor 10 comprises a reaction unit 100 and a control unit 200.

The reaction unit 100 is connected to the control unit 200. The reaction unit 100 may be a flow reactor such as a micro flow reactor that generates a target object through flow chemistry or the like. The reaction unit 100 includes a first material tank 102, a first pump 104, a first liquid-feeding tube 106, a first collection tank 108, a second material tank 112, a second pump 114, a second liquid-feeding tube 116, a second collection tank 118, a first mixer 120, a first inflow line 180, a first cleaning tank 182, a first detection member 122, a first reaction tube 132, a third material tank 134, a third pump 136, a third liquid-feeding tube 138, a third collection tank 142, a first disposal tank 144, a second mixer 148, a second inflow line 190, a second cleaning tank 192, second detection member 149, a second reaction tube 150, a second disposal tank 154, a target object tank 156, and an image capturing unit 157. The liquid-feeding tubes, the mixers, and the reaction tubes may each be an individual component, and a plurality of such components are combined in the reaction unit 100 to constitute a flow channel from the material tanks to the target object tank 156 having a width in the range of tens of micrometers to tens of millimeters.

The first material tank 102 is connected to the first mixer 120 via the first pump 104 and the first liquid-feeding tube 106. The first material tank 102 contains a first material. The first pump 104 supplies the first material from the first material tank 102 to the first liquid-feeding tube 106 at a flow speed or flow rate according to a reaction condition. The first liquid-feeding tube 106 may be a through hole or a tube formed on a board-shaped cell made of metal or resin. A first material fluid, which is the first material, flows into one of the inlets of the first mixer 120 from the first liquid-feeding tube 106.

The first collection tank 108 is connected between the first pump 104 and the first material tank 102 via a first collection line 107 for collecting the first material fluid. The first collection tank 108 contains the first material fluid collected from the first liquid-feeding tube 106 in a collection operation when liquid leakage has occurred in the flow channel.

The second material tank 112 is connected to the first mixer 120 via the second pump 114 and the second liquid-feeding tube 116. The second material tank 112 contains a second material. The second pump 114 supplies the second material from the second material tank 112 to the second liquid-feeding tube 116 at a flow speed or flow rate according to a reaction condition. The second liquid-feeding tube 116 may be a through hole or a tube formed on a board-shaped cell made of metal or resin. A second material fluid, which is the second material, flows into another inlet of the first mixer 120 from the second liquid-feeding tube 116.

The second collection tank 118 is connected between the second pump 114 and the second material tank 112 via a second collection line 117 for collecting the second material fluid. The second collection tank 118 contains the second material fluid collected from the second liquid-feeding tube 116 in a collection operation when liquid leakage has occurred in the flow channel.

The outlet of the first mixer 120 is connected to one end of the first reaction tube 132. The first mixer 120 may be a static mixer such as a T-shaped mixer or a Y-shaped mixer. The first mixer 120 mixes therein the first material fluid and the second material fluid that flows into it from the two inlets, and discharges a first reaction fluid to the first reaction tube 132.

The first inflow line 180 may be provided in the first mixer 120 provided in the middle of the way of the flow channel. The first cleaning tank 182 is connected to the first inflow line 180 for causing a cleaning liquid to flow in the middle of the way the flow channel. The first cleaning tank 182 contains the cleaning liquid to be flowed into the first mixer 120 in a cleaning operation when reaction abnormality has occurred.

The first detection member 122 is arranged to be in contact with the first mixer 120. The first detection member 122 is a member for detecting liquid leakage in the flow channel. Variation in transparency, color (at least one of hue, saturation, or brightness), shape or the like may occur in at least a part of the first detection member 122, when liquid leakage has occurred in the first mixer 120.

Another end of the first reaction tube 132 is connected to the second mixer 148. The first reaction tube 132 may be a through hole or a tube formed on a board-shaped cell made of metal or resin. The first reaction tube 132 has the first reaction fluid flowing therethrough, and discharges the first reaction fluid to one inlet of the second mixer 148. Reaction proceeds while the first reaction fluid flows through the first reaction tube 132. The length, width, or the shape of the first reaction tube 132 may be set to adjust the reaction condition such as the reaction time.

The third material tank 134 is connected to the second mixer 148 via the third pump 136 and the third liquid-feeding tube 138. The third material tank 134 contains a third material. The third pump 136 supplies the third material from the third material tank 134 to the third liquid-feeding tube 138 at a flow speed or flow rate according to a reaction condition. The third liquid-feeding tube 138 may be a through hole or a tube formed on a board-shaped cell made of metal or resin. A third material fluid, which is the third material, flows into another inlet of the second mixer 148 from the third liquid-feeding tube 138.

The third collection tank 142 is connected to between the third pump 136 and the third material tank 134 via a third collection line 140 for collecting the third material fluid. The third collection tank 142 contains the third material fluid collected from the third liquid-feeding tube 138 in a collection operation when liquid leakage has occurred.

The first disposal tank 144 is connected between the first mixer 120 and the second mixer 148 via a first disposal line 143. The first disposal tank 144 contains the first reaction fluid disposed from the first reaction tube 132 in a disposal operation when liquid leakage has occurred in the flow channel.

An outlet of the second mixer 148 is connected to one end of the second reaction tube 150. The second mixer 148 may be a static mixer such as a T-shaped mixer or a Y-shaped mixer. The second mixer 148 mixes the first reaction fluid and the third material fluid flowing in from the two inlets in the inside thereof, and discharges a second reaction fluid to the second reaction tube 150.

The second inflow line 190 may be provided in the second mixer 148 provided in the middle of the way of the flow channel. The second cleaning tank 192 is connected to the second inflow line 190 for causing the cleaning liquid to flow in the middle of the way of the flow channel. The second cleaning tank 192 contains a cleaning liquid to be flowed in the second mixer 148 in a cleaning operation when a reaction abnormality has occurred.

The second detection member 149 is arranged to be in contact with the second mixer 148. The second detection member 149 is a member for detecting liquid leakage in the flow channel. Variation in transparency, color, shape or the like may occur in at least a part of the second detection member 149, when liquid leakage has occurred in the second mixer 148.

Another end of the second reaction tube 150 is connected to the target object tank 156. The second reaction tube 150 may be a through hole or a tube formed on a board-shaped cell made of metal or resin. The second reaction tube 150 has the second reaction fluid flowing therethrough, and discharges the second reaction fluid to the target object tank 156. Reaction proceeds while the second reaction fluid flows through the second reaction tube 150. The length, width, or the shape of the second reaction tube 150 may be set to adjust the reaction condition such as the reaction time.

The second disposal tank 154 is connected between the second mixer 148 and the target object tank 156 via a second disposal line 152. The second disposal tank 154 contains the second reaction fluid disposed from the second reaction tube 150 in a disposal operation when liquid leakage has occurred in the flow channel.

The target object tank 156 contains a target object obtained after the reaction of the second reaction fluid.

The image capturing unit 157 is connected to the control unit, and may be an infrared camera, a camera that captures a two-dimensional image, or a plurality of cameras that captures a three-dimensional image. The image capturing unit 157 may be arranged to capture the inside of the reaction unit 100. A position of the image capturing unit 157 relative to each component of the reaction unit 100 may be fixed. The image capturing unit 157 may output data of the captured image to the control unit. One image capturing unit 157 may be arranged to capture the entire reaction unit 100, or a plurality of image capturing units 157 may be arranged to each capture a plurality of areas of the reaction unit 100.

The reaction unit 100 further includes a first pressure gauge 160, a second pressure gauge 162, a third pressure gauge 164, a first temperature measurement unit 170, a second temperature measurement unit 172, a third temperature measurement unit 176, a fourth temperature measurement unit 174, and a fifth temperature measurement unit 178.

The first pressure gauge 160 may be arranged between the first pump 104 and the first mixer 120, for example, at a connecting section between the first pump 104 and the first liquid-feeding tube 106. The first pressure gauge 160 may measure the pressure in the first liquid-feeding tube 106 for the first material fluid supplied from the first pump 104. In addition, the first pressure gauge 160 may measure the flow rate, flow speed, or the like of the first material fluid in the first liquid-feeding tube 106, and calculate the pressure of the first material fluid from the measurement result.

The second pressure gauge 162 may be arranged between the second pump 114 and the first mixer 120, for example, at a connecting section between the second pump 114 and the second liquid-feeding tube 116. The second pressure gauge 162 may measure the pressure in the second liquid-feeding tube 116 for the second material fluid supplied from the second pump 114. The second pressure gauge 162 may measure the flow rate, the flow speed or the like of the second material fluid in the second liquid-feeding tube 116, and calculate the pressure of the second material fluid from the measurement result.

The third pressure gauge 164 may be arranged between the third pump 136 and the second mixer 148, for example, at a connecting section between the third pump 136 and the third liquid-feeding tube 138. The third pressure gauge 164 may measure the pressure in the third liquid-feeding tube 138 for the third material fluid supplied from the third pump 136. The third pressure gauge 164 may measure the flow rate, the flow speed, or the like of the third material fluid in the third liquid-feeding tube 138, and calculate the pressure of the third material fluid from the measurement result.

The first temperature measurement unit 170, the second temperature measurement unit 172, the third temperature measurement unit 176, the fourth temperature measurement unit 174, and the fifth temperature measurement unit 178 may respectively measure the temperature of the fluid flowing inside the first liquid-feeding tube 106, the second liquid-feeding tube 116, the third liquid-feeding tube 138, the first reaction tube 132, and the second reaction tube 150. The first temperature measurement unit 170, the second temperature measurement unit 172, the third temperature measurement unit 176, the fourth temperature measurement unit 174, and the fifth temperature measurement unit 178 may each be an optical temperature sensor of a non-contact type, a resistance thermometer bulb, a thermistor, or a thermocouple.

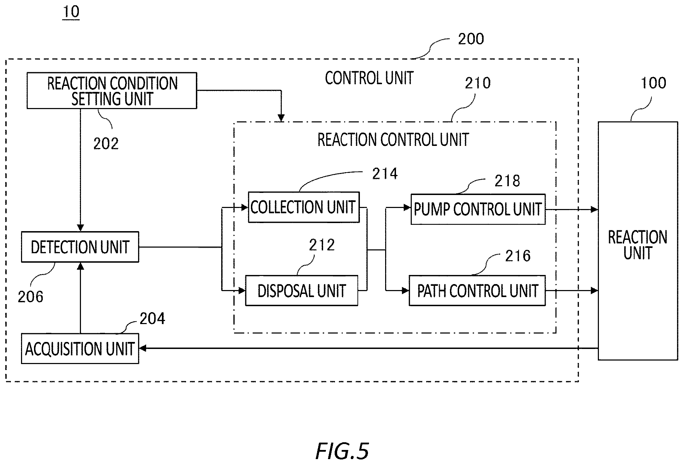

The control unit 200 is connected to the reaction unit 100 in a wired or wireless manner. The control unit 200 controls the reaction unit 100 according to the set reaction condition. The control unit 200 detects liquid leakage in the flow channel, and causes the reaction unit 100 to perform at least one of the collection operation to collect the material or the disposal operation to dispose the reaction fluid. The control unit 200 will be described in more detail by using Fig. 5.

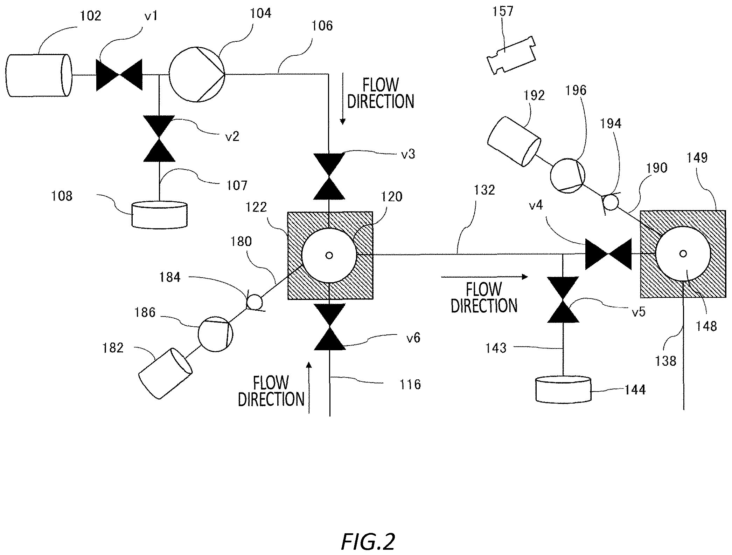

Fig. 2 illustrates a descriptive view of a part of the reaction unit 100. Fig. 2 illustrates details of a periphery of the first collection tank 108 and the first disposal tank 144 of the reaction unit 100 in Fig. 1.

The first collection tank 108 is connected between a first valve v1 and the first pump 104 via the first collection line 107. The first collection line 107 can collect the first material fluid before being mixed in another fluid by being provided upstream of the first mixer 120. The first valve v1 is provided between the first material tank 102 and the first pump 104. The second valve v2 is provided in the first collection line 107. In the first reaction tube 132, the third valve v3 is provided between the first pump 104 and the first mixer 120 at a closer position to the first mixer 120. The first valve v1, the second valve v2, and the third valve v3 are controlled for opening and closing thereof by the control unit 200 in the collection operation for the first collection tank 108.

The first disposal tank 144 is connected between a fourth valve v4 and the first mixer 120 via the first disposal line 143. The fourth valve v4 is provided between the first mixer 120 and the second mixer 148. The fifth valve v5 is provided in the first disposal line 143. In the second liquid-feeding tube 116, the sixth valve v6 is provided between the second pump 114 and the first mixer 120 at a closer position to the first mixer 120.

The first cleaning tank 182 is connected to the first mixer 120 via the first inflow line 180. The first inflow line 180 includes a first inflow pump 186 and a first check valve 184. The first inflow pump 186 feeds the cleaning liquid in the first cleaning tank 182 to the first inflow line 180. The first check valve 184 is provided between the first cleaning tank 182 and the first mixer 120. The first check valve 184 prevents backflow of the fluid from the first mixer 120 to the first cleaning tank 182. The third valve v3, the fourth valve v4, the fifth valve v5, and the sixth valve v6 are controlled for opening and closing thereof by the control unit 200 in the cleaning operation in which the cleaning liquid is flowed from the first cleaning tank 182 to the first disposal tank 144.

The second cleaning tank 192 is connected to the second mixer 148 via the second inflow line 190. The second inflow line 190 includes a second inflow pump 196 and a second check valve 194. The second inflow pump 196 feeds the cleaning liquid in the second cleaning tank 192 to the second inflow line 190. The second check valve 194 is provided between the second cleaning tank 192 and the second mixer 148. The second check valve 194 prevents backflow of the fluid from the second mixer 148 to the second cleaning tank 192. The reactor 10 may include an additional valve or the like for causing the cleaning liquid to flow from the second cleaning tank 192 to the second disposal tank 154, in a similar configuration as that of the third valve v3, the fourth valve v4, the fifth valve v5, and the sixth valve v6.

Note that, in the reaction unit 100, an additional valve may be arranged in a similar configuration as the first valve v1, the second valve v2, and the third valve v3 for the collection operation for each of the second collection tank 118 and the third collection tank 142. In the reaction unit 100, an additional valve may be arranged in a similar configuration as the fourth valve v4 and the fifth valve v5 for the disposal operation for the second disposal tank 154.

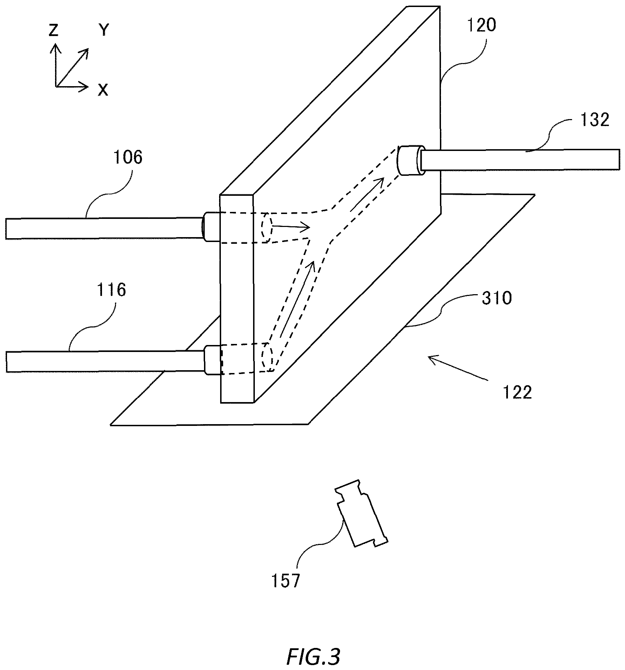

Fig. 3 is a schematic view illustrating an example of a first detection member 122 in the present embodiment. In Fig. 3, the x axis in the left-right direction, the z axis in the upward/downward direction, and the y axis in the depth direction are shown to be orthogonal to one another. Hereinafter, description may be given by using these three axes. In Fig. 3, the flow channel in the first mixer 120 is illustrated with a dashed line, and a flow direction in said flow channel is illustrated with an arrow.

In the example of Fig. 3, the first mixer 120 is a Y-shaped mixer. The first mixer 120 has an inlet to which each of the first liquid-feeding tube 106 and the second liquid-feeding tube 116 is connected, and an outlet from which the first reaction fluid in which the first material fluid and the second material fluid are mixed is discharged into the first reaction tube 132. The first mixer 120 has a Y-shaped flow channel inside the board-shaped cell made of metal or resin. The first liquid-feeding tube 106, the second liquid-feeding tube 116, and the first reaction tube 132 are connected such that they extend in a direction perpendicular to the YZ plane of the board-shaped cell of the first mixer 120.

The first detection member 122 is arranged below the flow channel. In Fig. 3, the first detection member 122 may be arranged below the first mixer 120 in the z-axis direction, and contact the lower surface of the first mixer 120. The first detection member 122 may be arranged between the first mixer 120 and the image capturing unit 157 in the Z-axis direction. The first detection member 122 may include ground glass 310 at least in a liquid leakage detection portion (for example, in a range corresponding to the lower surface of the first mixer 120). For example, the transparency of a surface of the ground glass 310, which is the first detection member 122, is increased when liquid (material fluid or reaction fluid) that has leaked outside from the flow channel contacts thereto. Note that, the first detection member 122 may include paper, instead of or in addition to ground glass 310. In this case, the color of the paper, which is the first detection member 122 is varied (for example, the color becomes darker) due to liquid (material fluid or reaction fluid) that leaked outside from the flow channel permeating thereon.

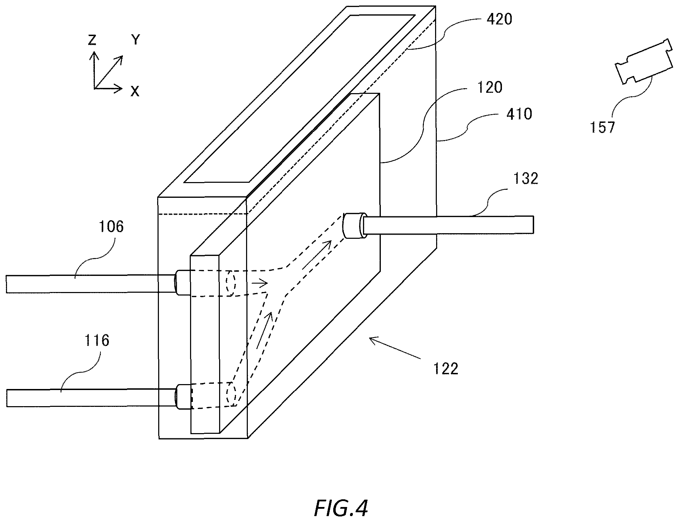

Fig. 4 is a schematic view illustrating another example of the first detection member 122 in the present embodiment. In Fig. 4, the X axis in the left-right direction, the Z axis in the upward/downward direction, and the Y axis in the depth direction are shown to be orthogonal to one another. Hereinafter, description may be given by using these three axes. In Fig. 4, the flow channel in the first mixer 120 is illustrated with a dashed line, and a flow direction in said flow channel is illustrated with an arrow. In the example of Fig. 4, the first mixer 120 may have a configuration similar to that of Fig. 3.

The first detection member 122 has a containing unit 410 that contains the flow channel in the detection liquid 420. The containing unit 410 may contain the entire first mixer 120 in the detection liquid 420. The containing unit 410 may be made of glass or resin. The containing unit 410 may be transparent such that the inside thereof can be captured from an image capturing unit 157 arranged outside the containing unit 410. The detection liquid 420 may be transparent liquid such as water or organic solvent. The detection liquid 420 may have a color that is different from the material fluid or the reaction fluid, or may be colorless and transparent.

Fig. 5 illustrates a block diagram of the control unit 200. The control unit 200 may be computer such as a PC, a tablet PC, a smartphone, a work station, a server computer, or a general-purpose computer, or may be a computer system to which a plurality of computers is connected. Such a computer system is also a computer in a broad sense. In addition, the control unit 200 may be implemented by one or more executable virtual computer environment in a computer. Alternatively, the control unit 200 may be a special-purpose computer designed for a flow reactor, or may be a special-purpose hardware achieved by a dedicated circuitry. In addition, the control unit 200 may be achieved by cloud computing. The control unit 200 has a reaction condition setting unit 202, an acquisition unit 204, a detection unit 206, and a reaction control unit 210.

The reaction condition setting unit 202 is connected to the reaction control unit 210 to set a reaction condition in the reaction unit 100. The reaction condition may include at least one of pressure, flow speed, flow rate, or temperature of the fluid in each flow channel. The reaction condition setting unit 202 may output the reaction condition to the detection unit 206 and the reaction control unit 210.

The acquisition unit 204 is connected to the reaction unit 100 and the detection unit 206 to acquire parameters related to a state of the fluid from the reaction unit 100. The acquisition unit 204 acquires an image capturing a state of the flow channel in the reaction unit 100 through which a fluid flows to be reacted. The acquisition unit 204 may receive data of the image capturing the state of the flow channel from the image capturing unit 157 arranged in the reaction unit 100. The acquisition unit 204 may acquire, as the image capturing the state of the flow channel, an image including components such as the reaction tube that constitutes the flow channel, or may acquire an image of the detection member only, without including components such as the reaction tube that constitutes the flow channel. The acquisition unit 204 may further acquire measurement values or calculated values from sensors arranged in the reaction unit 100, such as the first pressure gauge 160, the second pressure gauge 162, the third pressure gauge 164, the first temperature measurement unit 170, the second temperature measurement unit 172, the third temperature measurement unit 176, the fourth temperature measurement unit 174, and the fifth temperature measurement unit 178. The acquisition unit 204 may output the acquired result to the detection unit 206.

The detection unit 206 is connected to the reaction control unit 210. The detection unit 206 detects liquid leakage in the flow channel based on the image acquired by the acquisition unit 204. The detection unit 206 may have an image sensor that processes the image to detect variation in the image. The detection unit 206 may further detect, from the measurement value of the sensors or the like in the reaction unit 100, reaction abnormality, such as that the state of the fluid in the flow channel is out of the set reaction condition. The detection unit 206 may output the detected result to the reaction control unit 210.

The reaction control unit 210 is connected to the reaction unit 100 to control each component of the reaction unit 100 according to the set reaction condition and the detection result by the detection unit 206. The reaction control unit 210 has a disposal unit 212, a collection unit 214, a path control unit 216, and a pump control unit 218.

The disposal unit 212 is connected to the path control unit 216 and the pump control unit 218. The disposal unit 212 performs a disposal operation in which the fluid in the flow channel is disposed when liquid leakage has occurred in the flow channel. The disposal unit 212 may cause liquid for cleaning to flow in the flow channel to dispose at least a part of the reaction fluid in the flow channel, when liquid leakage in the flow channel is detected by the detection unit 206. The disposal unit 212 may output control data to the path control unit 216 and the pump control unit 218 to perform control corresponding to the disposal operation when detection result of liquid leakage in the flow channel is received from the detection unit 206.

The collection unit 214 is connected to the path control unit 216 and the pump control unit 218. The collection unit 214 performs a collection operation in which at least a part of the material fluid in the flow channel is collected, when liquid leakage in the flow channel is detected by the detection unit 206. The collection unit 214 may output control data to the path control unit 216 and the pump control unit 218 to perform control corresponding to the collection operation, when detection result of the liquid leakage in the flow channel is received from the detection unit 206.

The path control unit 216 is connected to the reaction unit 100 to control switching of the flow channels of the reaction unit 100. The path control unit 216 opens and closes the valve such that a flow channel from the material tank to the target object tank 156 is formed in the reaction control. The path control unit 216 may perform control for opening and closing of the valve or the like in the flow channel according to control data from at least one of the disposal unit 212 or the collection unit 214 to perform switching of the flow channels of the reaction unit 100. In addition, the path control unit 216 may perform switching of the flow channels for reaction control in the reaction unit 100 according to the reaction condition.

The pump control unit 218 is connected to the reaction unit 100 to control the operation of the pump of the reaction unit 100. In the reaction control, the pump control unit 218 controls an output of the pump according to the set reaction condition to cause the material fluid to flow through the liquid-feeding tube. The pump control unit 218 may control the operation such as stopping the pump according to control data from at least one of disposal unit 212 or the collection unit 214. In addition, the pump control unit 218 may control the output of the pump for reaction control in the reaction unit 100 according to the reaction condition.

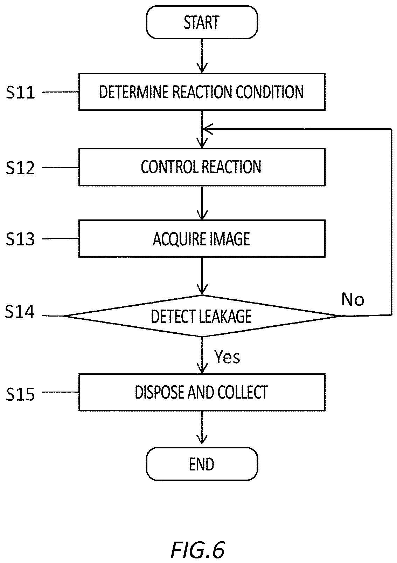

Fig. 6 illustrates a reaction flow in the reactor 10 of the present embodiment. In the reaction flow of Fig. 6, as an example, in order to synthesize peptide, the first material, the second material, and the third material may each be liquid such as organic solvent or water including different amino acids.

At step S11, the reaction condition setting unit 202 sets a reaction condition. The reaction condition setting unit 202 may receive input of a reaction condition from a user or an external apparatus. The reaction condition setting unit 202 may have a table representing a relationship, obtained through experiments or the like, between an optimal reaction condition at which the yield becomes the highest and the type of the material fluid. The reaction condition setting unit 202 may receive a designation of the material fluid to be used from the user or the external apparatus, and set an optimal reaction condition from said table. The reaction condition setting unit 202 outputs the set reaction condition to the reaction control unit 210 and the detection unit 206. The reaction condition setting unit 202 may output, to the detection unit 206, data representing the timing at which reaction control is to be started.

At step S12, the reaction control unit 210 controls the reaction unit 100 such that the reaction condition is met. The reaction control unit 210 may control the valve such that a flow channel for the reaction is formed, causes the pump to be operated with an output according to the reaction condition, and control the temperature or the like of the flow channel. The reaction control unit 210 may perform feedback control for the reaction unit 100 according to the measurement value acquired by the acquisition unit 204. In the reaction control, the path control unit 216 may open the first valve v1, the third valve v3, the fourth valve v4 and the sixth valve v6 in Fig. 2, and close the second valve v2 and the fifth valve v5 to form the flow channel.

At step S13, the detection unit 206 may instruct the acquisition unit 204 to acquire an image from the image capturing unit 157 at a timing at which the reaction control is started. The acquisition unit 204 may acquire the image captured by the image capturing unit 157 according to said instruction. The acquisition unit 204 may acquire, from the image capturing unit 157, time-series images at regular intervals.

The acquisition unit 204 may acquire, as the image of the state of the flow channel, at least one of an image of a plurality of components that form the flow channel of the reaction unit 100 (the pump, the liquid-feeding tube, the mixer, the reaction tube, and the like), an image of the first detection member 122, an image of the second detection member 149, or an image of a surrounding of the flow channel from the image capturing unit 157. The acquisition unit 204 may acquire, as the image of the first detection member 122 or the image of the second detection member 149, an image of the ground glass 310, and in this case, may acquire an image capturing only the ground glass 310. The image acquisition unit 204 may acquire the image of the state of the flow channel captured by the image capturing unit 157 by using, as the light source, at least one of near-infrared light, LED, laser, or light reflected by a diffuser plate. By using such a light source, the detection accuracy is further enhanced.

The acquisition unit 204 may further acquire measurement value from various types of sensor installed in the reaction unit 100. The detection unit 206 may receive measurement values from each of the first pressure gauge 160, the second pressure gauge 162, the third pressure gauge 164, the first temperature measurement unit 170, the second temperature measurement unit 172, the third temperature measurement unit 176, the fourth temperature measurement unit 174, and the fifth temperature measurement unit 178 at regular intervals. The acquisition unit 204 may output the acquired data to the detection unit 206.

At step S15, the detection unit 206 detects liquid leakage in the flow channel from the acquired image. The detection unit 206 may detect liquid leakage in the flow channel when variation in at least one of feature quantity, brightness, or color of the image indicating the state of the flow channel exceeds a threshold. The detection unit 206 may compare the current image with a baseline image and calculate the variation in at least one of brightness or color in at least a part of the current image. The detection unit 206 may use, as the baseline image, an image acquired from the image capturing unit 157 at a timing at which the reaction control is started, or an image acquired before acquiring (for example, immediately before acquiring) the current image in a time-series manner. When detecting liquid leakage from a plurality of images captured at different locations of the flow channel, the detection unit 206 may use a plurality of respectively corresponding baseline images.

The detection unit 206 may detect liquid leakage in the flow channel by using images of the first detection member 122 and the second detection member 149. The detection unit 206 may detect liquid leakage in the flow channel in response to sensing variation in at least one color or brightness in the image of the ground glass 310, which is the detection member. As an example, a part of the ground glass 310 becomes wet and transparent due to liquid that leaked from the flow channel, and better transmits light from the light source. The detection unit 206 may detect that liquid leakage has occurred when the variation (difference between brightness of the current image and brightness of the baseline image) in brightness in said part of the ground glass 310 exceeds the threshold.

The detection unit 206 may detect liquid leakage in the flow channel based on an image of the detection liquid 420 in the containing unit 410, which is the detection member. As an example, the material fluid or the reaction fluid that has leaked outside the flow channel ix mixed with the detection liquid 420, thereby causing variation in at least one of color or brightness of the detection liquid 420 in a region where said mixing occurs in the captured image. The detection unit 206 may detect that liquid leakage has occurred when variation (difference between the brightness/color of the current image and the brightness/color of the baseline image) in at least one color or brightness of the detection liquid 420 in at least a part of the image exceeds a threshold.

The detection unit 206 may detect liquid leakage in the flow channel in response to sensing fluctuation of light in the surrounding of the flow channel. As an example, the light from the light source fluctuates in the captured image due to heat or reflection of the fluid that leaked outside from the flow channel. The detection unit 206 may detect that liquid leakage has occurred when variation (difference between the brightness of the current image and the brightness of the baseline image) in the brightness in at least a part of the image due to said fluctuation of light exceeds a threshold. The detection unit 206 may perform detection of liquid leakage with fluctuation of light for a flow channel located where no detection member is arranged.

The detection unit 206 may detect liquid leakage in the flow channel from an image capturing the state of the flow channel with an infrared camera. As an example, heat distribution is varied due to heat of the material fluid or the reaction fluid that leaked outside from the flow channel, which causes variation in said leaked region in the captured image. The detection unit 206 may detect that liquid leakage has occurred when variation in said image occurs, or when the area of said image in which the variation occurred exceeds a threshold. The detection unit 206 may perform detection of liquid leakage with an image captured by an infrared camera for a flow channel located where no detection member is arranged.

The detection unit 206 may have a table representing correspondence relationship between coordinates in the image or the detection member and each component of the reaction unit 100. The detection unit 206 may determine, by using said table, the component (the pump, the liquid-feeding tube, the mixer, the reaction tube or the like) in which liquid leakage occurred from the position (or the detection member) at which the liquid leakage was detected.

The detection unit 206 may further detect reaction abnormality. The detection unit 206 may compare a plurality of measurement values acquired by the acquisition unit 204 with thresholds of respectively corresponding reaction conditions, and detect that the reaction of the fluid is abnormal when at least one of the plurality of measurement values exceeds the threshold or is below the threshold.

The detection unit 206 may output the detection result to the reaction control unit 210. When liquid leakage is detected, the detection unit 206 may output, to the reaction control unit 210, a detection result include data indicating the component in which the liquid leakage was detected. The flow transitions to step S15 when the detection unit 206 detects that liquid leakage has occurred in the reaction unit 100. The flow transitions to step S12 when detection unit 206 detects no liquid leakage in the reaction unit 100, that is, when the reaction is normal, and continues to perform reaction control.

At step S15, the reaction control unit 210 controls the reaction unit 100 to perform the disposal operation and collection operation. The disposal unit 212 contains the reaction fluid in the first disposal tank 144 and the second disposal tank via a disposal line when liquid leakage has occurred in the flow channel. The disposal unit 212 may control the reaction unit 100 via the pump control unit 218 and the path control unit 216. The disposal unit 212 stops the first pump 104, the second pump 114, and the third pump 136 when liquid leakage is detected by the detection unit 206, and controls the valve to switch the flow channel to one from the first reaction tube 132 to the first disposal tank 144, and further switches the flow channel to one from the second reaction tube 150 to the second disposal tank 154. In addition, the disposal unit 212 may display an instruction on a display screen to instruct the user to stop the first pump 104, the second pump 114, and the third pump 136, and to open and close the valve.

The disposal unit 212 may contain the first reaction fluid in the first reaction tube 132 into the first disposal tank 144 by causing the cleaning liquid (an organic solvent, water, or a solution including acid or alkaline substance) flow into the flow channel of the first mixer 120 from the first inflow line 180 for cleaning liquid inflow provided in the first mixer 120. As an example, before the inflow of the cleaning liquid, the disposal unit 212 may close the third valve v3, the fourth valve v4, and the sixth valve v6, and open the fifth valve v5. The disposal unit 212 may contain the second reaction fluid in the second mixer 148 and the second reaction tube 150 into the second disposal tank 154 by causing a cleaning liquid (an organic solvent, water, or a solution including an acid or alkaline substance) to flow into the flow channel of the second mixer 148 from the second inflow line 190 provided in the second mixer 148. Note that, the first inflow line 180 may be connected to the first reaction tube 132 via an additional valve, and in this case, the cleaning liquid can be caused to directly flow into the first reaction tube 132 from the first inflow line 180. In addition, the second inflow line 190 may be connected to the second reaction tube 150 via an additional valve, and in this case, the cleaning liquid can be caused to directly flow into the second reaction tube 150 from the second inflow line 190.

The disposal unit 212 may not perform the disposal operation for a component in which liquid leakage was detected to have occurred by the detection unit 206, or a reaction tube that is directly connected to said component. As an example, when data indicating that liquid leakage has occurred in the first mixer 120 is received from the detection unit 206, the disposal unit 212 may determine that the disposal operation is not to be performed for the first reaction tube that is directly connected to the first mixer 120, and may determine that the disposal operation is to be performed for other reaction tubes (that is, the second reaction tube). In this manner, when performing the disposal operation, the cleaning liquid or the reaction fluid can be prevented from further leaking from the flow channel.

The collection unit 214 collects, via the collection line, at least a part of the material fluid in the flow channel upstream of the first mixer 120 and the second mixer 148 arranged in the flow channel, when liquid leakage has occurred in the flow channel. The collection unit 214 may control the reaction unit 100 via the pump control unit 218 and the path control unit 216. The collection unit 214 may collect at least a part of the material fluid in the flow channel upstream of at least one of the first mixer 120 or the second mixer 148, by counter-rotating at least one the first pump 104, the second pump 114, or the third pump 136 for causing the reaction fluid to flow in the flow channel. As an example, the collection unit 214 controls the first valve v1 to be closed, and controls the second valve v2 and the third valve v3 to be open, from the reaction control state. The collection unit 214 may control the first pump 104 so as to feed liquid in a direction opposite to that at the time of reaction control, thereby causing the first material fluid in the first liquid-feeding tube 106 to flow into the first collection tank 108 and to be contained therein.

The collection unit 214 may not perform the collection operation for a component in which liquid leakage has been detected by the detection unit 206 or the material fluid in the liquid-feeding tube that is directly connected to said component. As an example, the collection unit 214 may determine that the counter-rotation operation of the first pump 104 and the second pump is not to be performed, and perform the collection operation for another liquid-feeding tube (that is, the third liquid-feeding tube), when data indicating that liquid leakage has occurred in the first mixer 120 is received from the detection unit 206.

The reactor 10 may simultaneously or sequentially perform the disposal operation and the collection operation. The reactor 10 may resume the reaction control from step S12 after the disposal operation and the collection operation.

The control unit 200 may display information related to liquid leakage in the flow channel on the display screen of the reactor 10 or an external display device when it is detected by the detection unit 206 that liquid leakage has occurred. The external display device may be a personal computer or a tablet of an operator performing operations of the reaction unit 100. The information related to liquid leakage in the flow channel may include information indicating that liquid leakage has occurred and information indicating the position or component where the liquid leakage occurred.

According to the reactor 10 of the present embodiment, detection can be performed more reliably even for liquid leakage of a small amount which is difficult to be distinguished by the pressure of the flow channel. Further, According to the reactor 10 of the present embodiment, a series of operations including detection of liquid leakage in the flow channel, disposal of the reaction fluid, and collection of the material can be efficiently performed, and reactivation of the reactor 10 can be quickly performed while suppressing increase in material costs.

Note that, the detection member may be one that corresponds to the entire flow channel, and it may be capable of detecting liquid leakage in the entire reaction unit 100 with one detection member. For example, the ground glass 310, which is the detection member, may be arranged in a range corresponding to the entire reaction unit 100, and the containing unit 410, which is the detection member, may contain the entire reaction unit 100 in the detection liquid.

The control unit 200 of the present embodiment may be a liquid leakage detection apparatus that does not control the reaction unit 100, and in this case, the control unit 200 may not have the collection unit 214, the disposal unit 212, the path control unit 220, or the pump control unit 222. In addition, the components of the reaction unit 100 are not limited to those in the present embodiment, and the reaction unit 100 may have more flow channels, mixers, and the like.

In addition, various embodiments of the present invention may be described with reference to flowcharts and block diagrams whose blocks may represent (1) steps of processes in which operations are executed or (2) sections of apparatuses responsible for executing operations. Certain steps and "sections" may be implemented by dedicated circuitry, programmable circuitry supplied with computer-readable instructions stored on computer-readable media, and/or processors supplied with computer-readable instructions stored on computer-readable media. The dedicated circuitry may include a digital and/or analog hardware circuit, or may include an integrated circuit (IC) and/or a discrete circuit. Programmable circuitry may include reconfigurable hardware circuits comprising logical AND, OR, XOR, NAND, NOR, and other logical operations, flip-flops, registers, memory elements, etc., such as field-programmable gate arrays (FPGA), programmable logic arrays (PLA), and the like.

A computer-readable medium may include any tangible device that can store instructions to be executed by a suitable device, and as a result, the computer-readable medium having instructions stored in the tangible device comprises an article of manufacture including instructions which can be executed to create means for executing operations specified in the flowcharts or block diagrams. Examples of the computer-readable medium may include an electronic storage medium, a magnetic storage medium, an optical storage medium, an electromagnetic storage medium, a semiconductor storage medium, and the like. Specific examples of the computer-readable medium may include a floppy (registered trademark) disk, a diskette, a hard disk, a random access memory (RAM), a read-only memory (ROM), an erasable programmable read-only memory (EPROM or Flash memory), an electrically erasable programmable read-only memory (EEPROM), a static random access memory (SRAM), a portable compact disc read-only memory (CD-ROM), a digital versatile disc (DVD), a Blu-ray (registered trademark) disc, a memory stick, an integrated circuit card, or the like.

The computer-readable instruction may include an assembler instruction, an instruction-set-architecture (ISA) instruction, a machine instruction, a machine dependent instruction, a microcode, a firmware instruction, state-setting data, or either of source code or object code written in any combination of one or more programming languages including an object-oriented programming language such as Smalltalk (registered trademark), JAVA (registered trademark), and C++, and a conventional procedural programming language such as a "C" programming language or a similar programming language.

The computer-readable instruction may be provided for a processor of a general-purpose computer, a special purpose computer, or another programmable processing apparatus, or a programmable circuitry locally or via a local area network (LAN) or a wide area network (WAN) such as the Internet, and the computer-readable instruction may be executed to create means for executing the operations specified in the flowcharts or block diagrams. An example of the processor includes a computer processor, processing unit, microprocessor, digital signal processor, controller, microcontroller, or the like.

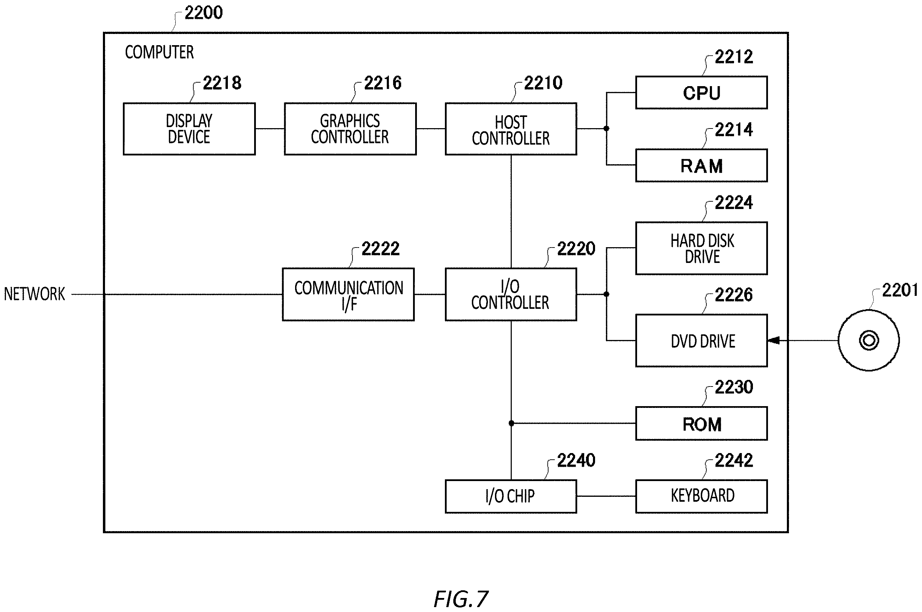

Fig. 7 shows an example of a computer 2200 in which a plurality of aspects of the present invention may be entirely or partially embodied. A program that is installed in the computer 2200 can cause the computer 2200 to function as operations associated with apparatuses according to the embodiments of the present invention or one or more sections of the apparatuses, or can cause the computer 2200 to execute the operations or the one or more sections thereof, and/or can cause the computer 2200 to execute processes according to the embodiments of the present invention or steps of the processes. Such a program may be executed by a CPU 2212 to cause a computer 2200 to execute certain operations associated with some or all of the blocks of flowcharts and block diagrams described herein.

The computer 2200 according to the present embodiment includes the CPU 2212, a RAM 2214, a graphics controller 2216, and a display device 2218, which are interconnected by a host controller 2210. The computer 2200 also includes input/output units such as a communication interface 2222, a hard disk drive 2224, a DVD-ROM drive 2226, and an IC card drive, which are connected to the host controller 2210 via an input/output controller 2220. The computer also includes legacy input/output units such as a ROM 2230 and a keyboard 2242, which are connected to the input/output controller 2220 via an input/output chip 2240.

The CPU 2212 operates in accordance with programs stored in the ROM 2230 and the RAM 2214, thereby controlling each unit. The graphics controller 2216 obtains image data generated by the CPU 2212 on a frame buffer or the like provided in the RAM 2214 or in the graphics controller 2216 itself, and causes the image data to be displayed on the display device 2218.

The communication interface 2222 communicates with other electronic devices via a network. The hard disk drive 2224 stores programs and data used by the CPU 2212 within the computer 2200. The DVD-ROM drive 2226 reads the programs or the data from a DVD-ROM 2201, and provides the hard disk drive 2224 with the programs or the data via the RAM 2214. The IC card drive reads programs and data from an IC card and/or writes programs and data into the IC card.

The ROM 2230 stores therein a boot program or the like executed by the computer 2200 at the time of activation, and/or a program depending on the hardware of the computer 2200. The input/output chip 2240 may also connect various input/output units to the input/output controller 2220 via a parallel port, a serial port, a keyboard port, a mouse port, or the like.

A program is provided by the computer-readable medium such as the DVD-ROM 2201 or the IC card. The program is read from the computer-readable medium, installed in the hard disk drive 2224, the RAM 2214, or the ROM 2230, which is also an example of the computer-readable medium, and executed by the CPU 2212. Information processing described in these programs is read by the computer 2200, and provides cooperation between the programs and the various types of hardware resources described above. An apparatus or method may be constituted by realizing the operation or processing of information in accordance with the usage of the computer 2200.

For example, when communication is executed between the computer 2200 and an external device, the CPU 2212 may execute a communication program loaded in the RAM 2214, and instruct the communication interface 2222 to process the communication based on the processing written in the communication program. The communication interface 2222, under control of the CPU 2212, reads transmission data stored on a transmission buffering region provided in a recording medium such as the RAM 2214, the hard disk drive 2224, the DVD-ROM 2201, or the IC card, and transmits the read transmission data to a network or writes reception data received from a network to a reception buffering region or the like provided on the recording medium.

In addition, the CPU 2212 may cause all or a necessary portion of a file or a database to be read into the RAM 2214, the file or the database having been stored in an external recording medium such as the hard disk drive 2224, the DVD-ROM drive 2226 (the DVD-ROM 2201), the IC card, etc., and execute various types of processing on the data on the RAM 2214. Then, the CPU 2212 writes the processed data back in the external recording medium.

Various types of information, such as various types of programs, data, tables, and databases, may be stored in the recording medium to undergo information processing. The CPU 2212 may execute, on the data read from the RAM 2214, various types of processing including various types of operations, information processing, conditional judgement, conditional branching, unconditional branching, information retrieval/replacement, or the like described throughout the present disclosure and specified by instruction sequences of the programs, and writes the results back to the RAM 2214. In addition, the CPU 2212 may retrieve information in a file, a database, or the like in the recording medium. For example, when a plurality of entries, each having an attribute value of a first attribute associated with an attribute value of a second attribute, is stored in the recording medium, the CPU 2212 may retrieve, out of the plurality of entries, an entry with the attribute value of the first attribute specified that meets a condition, read the attribute value of the second attribute stored in said entry, and thereby acquiring the attribute value of the second attribute associated with the first attribute meeting a predetermined condition.

The above-described program or software modules may be stored in the computer-readable medium on the computer 2200 or near the computer 2200. In addition, a recording medium such as a hard disk or a RAM provided in a server system connected to a dedicated communication network or the Internet can be used as a computer-readable medium, thereby providing the program to the computer 2200 via the network.

While the present invention has been described by way of the embodiments, the technical scope of the present invention is not limited to the above-described embodiments.

It is apparent to persons skilled in the art that various alterations or improvements can be made to the above described embodiments. It is also apparent from description of the claims that the embodiments to which such alterations or improvements are made can be included in the technical scope of the present invention.

It should be noted that the operations, procedures, steps, stages, and the like of each process performed by an apparatus, system, program, and method shown in the claims, specification, or drawings can be realized in any order as long as the order is not indicated by "prior to," "before," or the like and as long as the output from a previous process is not used in a later process. Even if the operation flow is described using phrases such as "first" or "next" for the sake of convenience in the claims, specification, or drawings, it does not necessarily mean that the process must be performed in this order.

### EXPLANATION OF REFERENCES

10: reactor,
100: reaction unit,
102: first material tank,
104: first pump,
106: first liquid-feeding tube,
107: first collection line,
108: first collection tank,
112: second material tank,
114: second pump,
116: second liquid-feeding tube,
117: second collection line,
118: second collection tank,
120: first mixer,
122: first detection member,
132: first reaction tube,
134: third material tank,
136: third pump,
138: third liquid-feeding tube,
140: third collection line,
142: third collection tank,
143: first disposal line,
144: first disposal tank,
148: second mixer,
149: second detection member,
150: second reaction tube,
152: second disposal line,
154: second disposal tank,
156: target object tank,
157: image capturing unit,
180: first inflow line,
182: first cleaning tank,
184: first check valve,
186: first inflow pump,
190: second inflow line,
192: second cleaning tank,
194: second check valve,
196: second inflow pump,
200: control unit,
204: acquisition unit,
202: reaction condition setting unit
206: detection unit,
210: reaction control unit,
212: disposal unit,
214: collection unit,
216: path control unit,
218: pump control unit,
310: ground glass,
410: containing unit,
420: detection liquid
2200: computer,
2201: DVD-ROM,
2210: host controller,
2212: CPU,
2214: RAM,
2216: graphics controller,
2218: display device,
2220: input/output controller,
2222: communication interface,
2224: hard disk drive,
2226: DVD-ROM drive,
2230: ROM,
2240: input/output chip,
2242: keyboard.

## Claims

1. An apparatus comprising:
an image acquisition unit which acquires an image capturing a state of a flow channel in a flow reactor through which a fluid flows to be reacted; and
a detection unit which detects liquid leakage in the flow channel based on the image acquired by the image acquisition unit.

2. The apparatus according to claim 1, wherein
the apparatus comprises a detection member for detecting liquid leakage in the flow channel,
the image acquisition unit acquires an image of the detection member as a state of the flow channel, and
the detection unit detects liquid leakage in the flow channel based on the image of the detection member.

3. The apparatus according to claim 2, wherein
variation in transparency, color, brightness, or a shape occurs in at least a part of the detection member when liquid leakage occurs in the flow channel.

4. The apparatus according to claim 3, wherein
the detection member includes ground glass.

5. The apparatus according to claim 4, wherein
the detection member is arranged below the flow channel,
the image acquisition unit acquires an image of ground glass, which is the detection member, as a state of the flow channel, and
the detection unit detects liquid leakage in the flow channel in response to sensing variation in at least one of color or brightness in the image of the ground glass.

6. The apparatus according to claim 2, wherein
the detection member has a containing unit which contains the flow channel in a detection liquid,
the image acquisition unit acquires an image of the detection liquid in the containing unit as a state of the flow channel, and
the detection unit detects liquid leakage in the flow channel based on the image of the detection liquid.

7. The apparatus according to claim 6, wherein
the detection unit detects liquid leakage in the flow channel in response to sensing a variation in at least one of color and brightness in the image of the liquid.

8. The apparatus according to claim 1, wherein
the image acquisition unit acquires an image of a surrounding of the flow channel as a state of the flow channel, and
the detection unit detects liquid leakage in the flow channel in response to sensing fluctuation of light in the surrounding of the flow channel.

9. The apparatus according to claim 1, wherein
the image acquisition unit acquires an image in which a state of the flow channel is captured with an infrared camera.

10. The apparatus according to claim 1, wherein
the image acquisition unit acquires a three-dimensional image in which a state of the flow channel is captured with a plurality of cameras.

11. The apparatus according to claim 1, wherein
the image acquisition unit acquires an image of a state of the flow channel captured by using, as a light source, at least one of a near-infrared light, an LED, a laser, or a light reflected by a diffuser plate.

12. A method comprising:
acquiring an image capturing a state of a flow channel in a flow reactor through which a fluid flows to be reacted; and
detecting liquid leakage in the flow channel based on the image acquired by the image acquisition unit.

13. A program that causes a computer to function as:
an image acquisition unit which acquires an image capturing a state of a flow channel in a flow reactor through which a fluid flows to be reacted; and
a detection unit which detects liquid leakage in the flow channel based on the image acquired by the image acquisition unit.
